# EUROPEAN PATENT SPECIFICATION

(11) **EP 3 770 659 B1**
(45) Date of publication and mention of the grant of the patent: **04.10.2023**
(21) Application number: 20176813.2
(22) Date of filing: 19.05.2016
(51) Int. Cl.: G02B 6/35, G06F 3/01, F21V 8/00, G03B 15/02

(54) **ILLUMINATOR**
BELEUCHTER
BLOC D'ÉCLAIRAGE

(30) Priority: 19.05.2015 US 201562163724 P
(43) Date of publication of application: 27.01.2021
(62) Divisional of application: 16797326.2
(73) Proprietor: Magic Leap, Inc., Plantation, FL 33322 (US)
(72) Inventor: KAEHLER, Adrian, San Diego, CA 92103 (US)
(74) Representative: Lecomte & Partners

(56) References cited:
- WO-A1-2010/122330
- WO-A2-2015/006784
- US-A1- 2011 227 813
- US-A1- 2013 077 049
- US-A1- 2015 016 777

## Description

### FIELD OF THE INVENTION

The subject invention relates to an optical device for generating illumination that appears to emanate from a location different from the actual light source. Such an optical device is useful for a variety of photographic or video capture situations where it is impractical or impossible to place an actual physical light source where needed.

### BACKGROUND OF THE INVENTION

Most photographic or video capture situations require some form of illumination. The desired illumination could be supplied, for example, by a flash connected to a camera. However, in many situations, providing the needed illumination can be a challenge.

One such situation relates to a display system developed by the assignee herein for the creation of an augmented reality for a user. In such a system, the user would be provided with a head mounted device that includes a window for viewing the outside world. The window would have the capability to generate image information and project that image information into the eyes of the user. In such a system, images of simulated objects could be generated and added to the real world scene. A more detailed description of this type of window is provided below.

There is interest in adding certain functionality to such head mounted displays. For example, there is interest in including a camera for monitoring the gaze direction of the user. Knowing where the user is looking at any moment has many benefits. For example, knowledge of a person's gaze can be used to control the display system. Knowledge of gaze direction can be used as a selection tool to control a mouse pointer, or its analog. Knowledge of gaze direction can be used to select objects in the field of view. Capturing gaze information with a camera can be improved by providing a source to illuminate the eye.

Another feature of interest in head mounted displays is the possibility of identifying the user through biometric measurements, such as iris recognition. An iris recognition system will include a camera for capturing an image of the iris. The process of capturing iris information can be improved if a source of illumination is provided.

The illumination device of the subject invention has some similarities to the structure of the window used by the assignee herein to create augmented reality. Although the embodiment of the subject invention will be discussed in this context, it should be understood that the invention is not limited to augmented reality systems but, in fact, could be used in any situation that requires illumination, particularly where it is desired to create a virtual illumination source.

The subject device includes a planar waveguide having a structure similar to that proposed for use in augmented reality. A description of a device for creating an augmented reality can be found in US 2013/0077049 A1.

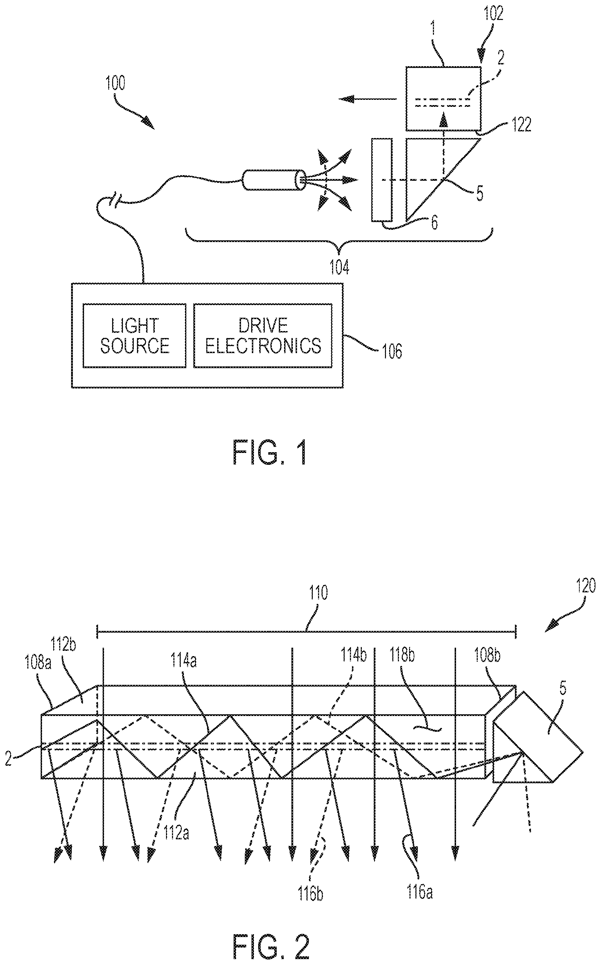

As generally described in FIG. 1 herein, an optical system 100 can include a primary waveguide apparatus 102 that includes a planar waveguide 1. The planar waveguide is provided with one or more diffractive optical elements (DOEs) 2 for controlling the total internal reflection of the light within the planar waveguide. The optical system further includes an optical coupler system 104 and a control system 106.

As best illustrated in FIG. 2, the primary planar waveguide 1 has a first end 108a and a second end 108b, the second end 108b opposed to the first end 108a along a length 110 of the primary planar waveguide 1. The primary planar waveguide 1 has a first face 112a and a second face 112b, at least the first and the second faces 112a, 112b (collectively, 112) forming a partially internally reflective optical path (illustrated by arrow 114a and broken line arrow 114b, collectively, 114) along at least a portion of the length 110 of the primary planar waveguide 1. The primary planar waveguide 1 may take a variety of forms which provide for substantially total internal reflection (TIR) for light striking the faces 112 at less than a defined critical angle. The planar waveguides 1 may, for example, take the form of a pane or plane of glass, fused silica, acrylic, or polycarbonate.

The DOE 2 (illustrated in FIGS. 1 and 2 by dash-dot double line) may take a large variety of forms which interrupt the TIR optical path 114, providing a plurality of optical paths (illustrated by arrows 116a and broken line arrows 116b, collectively, 116) between an interior 118 and an exterior 120 of the planar waveguide 1 extending along at least a portion of the length 110 of the planar waveguide 1. The DOE 2 may advantageously combine the phase functions of a linear diffraction grating with that of a circular or radial symmetric zone plate, allowing positioning of apparent objects and a focus plane for apparent objects. The DOE may be formed on the surface of the waveguide or in the interior thereof.

With reference to FIG. 1, the optical coupler subsystem 104 optically couples light to the waveguide apparatus 102. Alternatively, the light may be coupled directly into the edge of the waveguide 108bif the coupler is not used. As illustrated in FIG. 1, the optical coupler subsystem may include an optical element 5, for instance a reflective surface, mirror, dichroic mirror or prism to optically couple light into an edge 122 of the primary planar waveguide 1. The light can also be coupled into the waveguide apparatus through either the front or back faces 112. The optical coupler subsystem 104 may additionally or alternatively include a collimation element 6 that collimates light.

The control subsystem 106 includes one or more light sources and drive electronics that generate image data which may be encoded in the form of light that is spatially and/or temporally varying. As noted above, a collimation element 6 may collimate the light, and the collimated light is optically coupled into one or more primary planar waveguides 1 (only one primary waveguide is illustrated in FIGS. 1 and 2).

As illustrated in FIG. 2, the light propagates along the primary planar waveguide with at least some reflections or "bounces" resulting from the TIR propagation. It is noted that some implementations may employ one or more reflectors in the internal optical path, for instance thin-films, dielectric coatings, metalized coatings, etc., which may facilitate reflection. Light that propagates along the length 110 of the waveguide 1 intersects with the DOE 2 at various positions along the length 110. The DOE 2 may be incorporated within the primary planar waveguide 1 or abutting or adjacent one or more of the faces 112 of the primary planar waveguide 1. The DOE 2 accomplishes at least two functions. The DOE 2 shifts an angle of the light, causing a portion of the light to escape TIR, and emerge from the interior 118 to the exterior 120 via one or more faces 112 of the primary planar waveguide 1. The DOE 2 can also be configured to direct the out-coupled light rays to control the virtual location of an object at the desired apparent viewing distance. Thus, someone looking through a face 112a of the primary planar waveguide 1 can see the virtual light source as if from a specific viewing distance.

As will be discussed below, the subject illuminator can be configured using the DOE and waveguide technology discussed above.

### BRIEF SUMMARY OF THE INVENTION

The invention relates to an illuminator as defined in the appended claims.

An optical device is disclosed for generating illumination that appears to emanate from a location different from the actual light source. The device includes a waveguide having opposed first and second planar faces. A light source is positioned to direct light into the waveguide. A diffractive optical element (DOE) is formed across the waveguide. The DOE distributes the light entering the waveguide via total internal reflection and couples the light out of the surface of said first face.

In one embodiment, the DOE is configured to collimate the outgoing light, so as to emulate the light field of a source positioned at an infinite distance from the waveguide. In another embodiment, the DOE is configured to diverge the outgoing light, so as to emulate a light field of a source that is a predetermined distance from the waveguide. In a preferred embodiment, the light source generates a narrow bandwidth of radiation in the infrared region of the spectrum.

For instance, the DOE may be configured such that light rays exit said first face perpendicular thereto, or such that light rays exit said first face in a manner to create a virtual source in space opposite the second face; or such that light rays exit said first face in a manner to create at least two virtual sources in space opposite the second face.

The light source may generate infrared radiation. The second face is provided with a coating reflective for infrared radiation.

The light from the light source may be directed into the waveguide via the first face thereof and/or via the second face thereof. In another embodiment, the light source from the light source may be directed into the waveguide via an edge of the waveguide. In such an embodiment, the illuminator may include a second waveguide extending along the edge of the first waveguide. The second waveguide may receive the radiation from the light source and distribute the light along an axis of the first waveguide parallel to the edge.

### BRIEF DESCRIPTION OF THE DRAWINGS

FIG. 1 is a schematic diagram showing an optical system including a waveguide apparatus, a subsystem to couple light to or from the waveguide apparatus, and a control subsystem, according to one illustrated embodiment.
FIG. 2 is an elevational view showing a waveguide apparatus including a planar waveguide and at least one diffractive optical element positioned within the planar waveguide, illustrating a number of optical paths including totally internally reflective optical paths and optical paths between an exterior and an interior of the planar waveguide, according to one illustrated embodiment.
FIG. 3 is a schematic diagram showing an illuminator formed in accordance with a first embodiment of the subject invention where the virtual light source is at infinity.
FIG. 4 is a schematic diagram showing an illuminator formed in accordance with a second embodiment of the subject invention where the virtual light source is a point in space some finite distance from the waveguide.
FIG. 5 is a schematic diagram showing an illuminator formed in accordance with a third embodiment of the subject invention which includes a distribution waveguide.

### DETAILED DESCRIPTION OF THE INVENTION

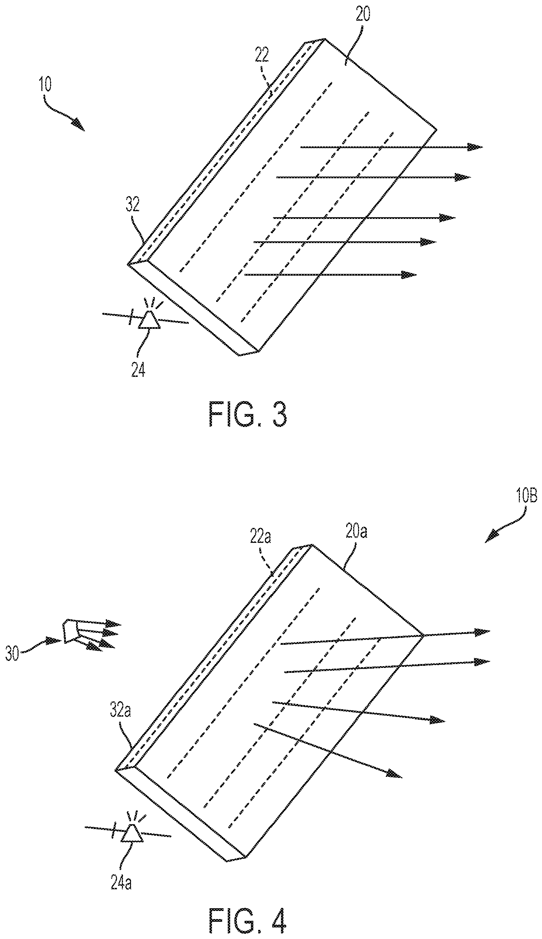

Figure 3 illustrates a first embodiment of an illumination device 10 made in accordance with the subject invention. The device may be used in a wide variety of applications that require illumination. The device may be particularly useful with head mounted displays for implementing features such as gaze tracking or iris identification.

Device 10 includes a planar waveguide 20. One or more diffractive optical elements (DOEs) 22 are formed in the waveguide. The DOE can be formed on a surface of the waveguide or be embedded within the waveguide.

A light source 24 is provided for generating optical radiation for illumination. A wide variety of light sources could be used. In the preferred embodiment, the light source generates a single wavelength or a narrow band of wavelengths. In one example, the light source 24 is a light emitting diode (LED). The light output of the LED is directed into the waveguide. The light can be directed into either side of the waveguide or along the edge thereof. The light then propagates throughout the waveguide by total internal reflections.

The DOE is arranged to out couple the light at various points along the surface of the waveguide. In the embodiment of Figure 3, the light rays coupled out are substantially perpendicular to the surface of the waveguide. This approach emulates the situation where the light source would be located at an infinite distance from the waveguide and the light is substantially collimated.

Figure 4 illustrates a device 10b in accordance with a second embodiment of the invention. In the Figure 4 embodiment, the DOE 22a of waveguide 20a is arranged to create diverging rays to emulate the effect of a point source 30 located a particular distance from the opposite side of the waveguide. The particular location of the virtual light source is controlled by configuring the DOE.

The DOE can be arranged to place the virtual light source in any location, from quite close to the waveguide to quite far away. The choice will depend on providing the best illumination for the particular application. For example, if the illumination of the eye is used to capture images of the iris, it may be better to move the virtual source farther away from the waveguide to create a more uniform illumination.

For augmented reality applications, it is preferable that the light source emits illumination in the infrared spectrum so that the radiation is not visible to the user. In this way, the illuminator would not interfere with the real world or computer generated images reaching the user. Using infrared illumination is particular useful for iris recognition as a much higher level of detail of the iris is available in this wavelength range.

In a system using an infrared source, it may be preferable to provide a coating that reflects infrared radiation on the side 32 (32a) of the waveguide (opposite the transmission side). An infrared coating would minimize any losses due to light leakage on that side. The infrared coating would not interfere with the transmission of visible light from the real world, through the waveguide and into the eyes of the user.

The embodiment of Figure 4 shows how the DOE can be configured to emulate light coming from a single point source. The invention uses two waveguides 20a aligned parallel to each other and each configured to emulate a point light source at a different location. In complement, the DOE can be configured to create diverging light rays that emulate light emanating from two or more virtual light sources. This could be achieved by allocating some fraction of the pixels of the DOE to one virtual source and another fraction of the DOE pixels to another virtual source.

Various pupil tracking systems are configured to require multiple light sources to generate multiple reflections from the eye. It is envisioned that an embodiment of the subject invention which can generate multiple virtual point source could be used to implement these type of pupil tracking systems.

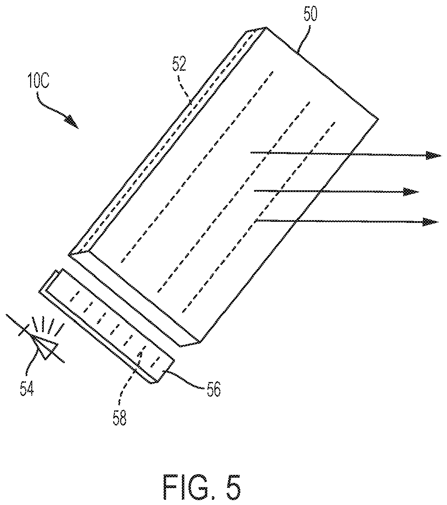

Figure 5 is a diagram of a system 10c that includes a planar waveguide 50 having a DOE 52. System 10c further includes a second waveguide 56 aligned with an edge of waveguide 50. Second waveguide 56 includes a DOE 58. Light source 54 directs light into the second waveguide. The light spreads across the second waveguide 56 via total internal reflection. The light exits second waveguide 56 and enters waveguide 50. In this embodiment, waveguide 56 acts to distribute light along the axis thereof (vertical axis of Figure 5). Waveguide 50 then distributes the light along the horizontal axis of Figure 5. The use of the second waveguide may improve coupling efficiency.

While the subject invention has been described with reference to some preferred embodiments, various changes and modifications could be made therein by one skilled in the art, without varying from the scope of the subject invention as defined by the appended claims.

## Claims

1. An illuminator (10, 10B, 10C), comprising:
a first waveguide (20, 20a, 50) having opposed first and second planar faces;
a light source (24, 24a, 54) positioned to direct light into the first waveguide (20, 20a, 50) via an edge of the first waveguide (20, 20a, 50);
a diffractive optical element, DOE (22, 22a, 52), formed across the first waveguide (20, 20a, 50), said DOE (22, 22a, 52) for spreading the light entering the first waveguide (20, 20a, 50) from the light source across the first waveguide (20, 20a, 50) via total internal reflection and coupling the light out of a surface of said first planar face, and
a second waveguide (20a) positioned parallel to the first waveguide (20a), wherein the first waveguide is configured to create a first virtual light source (30) at a first location and the second waveguide (20a) is configured to create a second virtual light source (30) at a second location.

2. An illuminator (10, 10B, 10C) as recited in claim 1, wherein said DOE (22, 22a, 52) is configured so that light rays exit said first planar face in a manner to create the first virtual light source in space opposite the second planar face.

3. An illuminator (10, 10B, 10C) as recited in claim 1, wherein said DOE (22, 22a, 52) is configured so that light rays exit said first planar face in a manner to create at least two virtual light sources in space opposite the second planar face.

4. An illuminator (10C) as recited in claim 1, further comprising a third waveguide (56) extending along the edge of the first waveguide (50), said third waveguide (56) adapted to receive the light from the light source (54) and distribute the light along an axis of the first waveguide (50) parallel to the edge.

5. An illuminator (10, 10B, 10C) as recited in claim 1, wherein the first virtual light source (30) is configured to provide a first illumination for an iris imaging application, and wherein the second virtual light source (30) is configured to provide a second illumination for a gaze tracking application.

6. A head mounted device comprising an illuminator according to any of claims 1-5.

7. A pupil tracking system comprising an illuminator according to any of claims 1-5.

## Patentansprüche

1. Ein Beleuchtungsgerät (10, 10B, 10C), das Folgendes umfasst:
einen ersten Wellenleiter (20, 20a, 50) mit gegenüberliegenden ersten und zweiten ebenen Flächen;
eine Lichtquelle (24, 24a, 54), die so positioniert ist, dass sie Licht über eine Kante des ersten Wellenleiters (20, 20a, 50) in den ersten Wellenleiter (20, 20a, 50) lenkt;
ein diffraktives optisches Element, DOE (22, 22a, 52), das über dem ersten Wellenleiter (20, 20a, 50) ausgebildet ist, wobei das DOE (22, 22a, 52) dazu dient, das von der Lichtquelle in den ersten Wellenleiter (20, 20a, 50) eintretende Licht über den ersten Wellenleiter (20, 20a, 50) durch interne Totalreflexion zu streuen und das Licht aus einer Oberfläche der ersten ebenen Fläche herauszukoppeln, und
einen zweiten Wellenleiter (20a), der parallel zu dem ersten Wellenleiter (20a) angeordnet ist, wobei der erste Wellenleiter so gestaltet ist, dass er eine erste virtuelle Lichtquelle (30) an einer ersten Stelle erzeugt und der zweite Wellenleiter (20a) so gestaltet ist, dass er eine zweite virtuelle Lichtquelle (30) an einer zweiten Stelle erzeugt.

2. Ein Beleuchtungsgerät (10, 10B, 10C) nach Anspruch 1, wobei das DOE (22, 22a, 52) so gestaltet ist, dass Lichtstrahlen aus der ersten ebenen Fläche in einer Weise austreten, dass die erste virtuelle Lichtquelle im Raum gegenüber der zweiten ebenen Fläche erzeugt wird.

3. Ein Beleuchtungsgerät (10, 10B, 10C) nach Anspruch 1, wobei das DOE (22, 22a, 52) so gestaltet ist, dass Lichtstrahlen aus der ersten ebenen Fläche in einer Weise austreten, dass mindestens zwei virtuelle Lichtquellen im Raum gegenüber der zweiten ebenen Fläche erzeugt werden.

4. Ein Beleuchtungsgerät (10C) nach Anspruch 1, das ferner einen dritten Wellenleiter (56) umfasst, der sich entlang der Kante des ersten Wellenleiters (50) erstreckt, wobei der dritte Wellenleiter (56) so beschaffen ist, dass er das Licht von der Lichtquelle (54) empfängt und das Licht entlang einer Achse des ersten Wellenleiters (50) parallel zu der Kante verteilt.

5. Ein Beleuchtungsgerät (10, 10B, 10C) nach Anspruch 1, wobei die erste virtuelle Lichtquelle (30) so gestaltet ist, dass sie eine erste Beleuchtung für eine Anwendung zur Abbildung der Iris erzeugt, und wobei die zweite virtuelle Lichtquelle (30) so gestaltet ist, dass sie eine zweite Beleuchtung für eine Anwendung zur Verfolgung des Blicks erzeugt.

6. Eine kopfgetragene Vorrichtung mit einem Beleuchtungsgerät nach einem der Ansprüche 1-5.

7. Ein Pupillenverfolgungssystem mit einem Beleuchtungsgerät nach einem der Ansprüche 1-5.

## Revendications

1. Un dispositif d'éclairage (10, 10B, 10C), comprenant :
un premier guide d'ondes (20, 20a, 50) comportant des première et seconde faces planaires opposées ;
une source lumineuse (24, 24a, 54) positionnée de façon à diriger la lumière dans le premier guide d'ondes (20, 20a, 50) à travers un bord du premier guide d'ondes (20, 20a, 50) ;
un élément optique diffractif, DOE (22, 22a, 52), formé à travers le premier guide d'ondes (20, 20a, 50), ledit DOE (22, 22a, 52) permettant de répartir la lumière entrant dans le premier guide d'ondes (20, 20a, 50) à partir de la source lumineuse à travers le premier guide d'ondes (20, 20a, 50) par réflexion interne totale et coupler la lumière provenant d'une surface de ladite première face planaire, et
un second guide d'ondes (20a) positionné parallèlement au premier guide d'ondes (20a), dans lequel le premier guide d'ondes est configuré de manière à créer une première source lumineuse virtuelle (30) à un premier emplacement et le second guide d'ondes (20a) est configuré de manière à créer une seconde source lumineuse virtuelle (30) à un second emplacement.

2. Un dispositif d'éclairage (10, 10B, 10C) selon la revendication 1, dans lequel ledit DOE (22, 22a, 52) est configuré de manière à ce que les rayons lumineux sortent de ladite première face planaire de manière à créer la première source lumineuse virtuelle dans l'espace opposé à la seconde face planaire.

3. Un dispositif d'éclairage (10, 10B, 10C) selon la revendication 1, dans lequel ledit DOE (22, 22a, 52) est configuré de manière à ce que les rayons lumineux sortent de ladite première face planaire de manière à créer au moins deux sources lumineuses virtuelles dans l'espace opposé à la seconde face planaire.

4. Un dispositif d'éclairage (10C) selon la revendication 1, comprenant en outre un troisième guide d'ondes (56) s'étendant le long du bord du premier guide d'ondes (50), ledit troisième guide d'ondes (56) étant adapté pour recevoir la lumière provenant de la source lumineuse (54) et distribuer la lumière le long d'un axe du premier guide d'ondes (50) parallèle au bord.

5. Un dispositif d'éclairage (10, 10B, 10C) selon la revendication 1, dans lequel la première source lumineuse virtuelle (30) est configurée de manière à fournir un premier éclairage pour une application d'imagerie de l'iris, et dans lequel la seconde source lumineuse virtuelle (30) est configurée de manière à fournir un second éclairage pour une application de suivi du regard.

6. Un dispositif monté sur la tête comprenant un dispositif d'éclairage selon l'une des revendications 1 à 5.

7. Un système de suivi de la pupille comprenant un dispositif d'éclairage selon l'une des revendications 1 à 5.
